Europäisches Patentamt

(19) European Patent Office (11) Numéro de publication: **0 007 270**

Office européen des brevets **B1**

(12) **FASCICULE DE BREVET EUROPEEN**

(45) Date de publication du fascicule du brevet: **08.06.83** (51) Int. Cl.³: **G 05 B 9/03, G 05 D 1/00**

(21) Numéro de dépôt: **79400446.5**

(22) Date de dépôt: **29.06.79**

(54) **Système de commande auto-surveillé d'un processus.**

(30) Priorité: **07.07.78 FR 7820286**

(43) Date de publication de la demande:
**23.01.80 Bulletin 80/2**

(45) Mention de la délivrance du brevet:
**08.06.83 Bulletin 83/23**

(84) Etats contractants désignés:
**BE DE GB IT SE**

(56) Documents cités:
**FR - A - 2 334 993**
**US - A - 3 551 776**
**US - A - 3 665 173**
**US - A - 3 688 099**
**US - A - 4 092 578**

(73) Titulaire: **SOCIETE FRANCAISE D'EQUIPEMENTS POUR LA NAVIGATION AERIENNE (S.F.E.N.A.) B.P. 59 Aérodrome de Villacoublay F-78140 Velizy Villacoublay (FR)**

(72) Inventeur: **Pham Duc, Thuy 25 bis avenue du Bois de Verrières F-92290 Chatenay Malabry (FR)**

(74) Mandataire: **Flavenot, Bernard Société S.E.D.I.C. 40 rue Victor Basch F-92120 Montrouge (FR)**

Système de commande auto-surveillé d'un processus

L'invention concerne un système de commande auto-surveillé d'un processus comprenant au moins un actionneur piloté au moyen d'un signal de commande, calculé selon une loi de pilotage, au moyen d'un dispositif d'élaboration de ladite loi ou d'une partie de celle-ci.

Elle a plus particulièrement pour objet un système de commande à systèmes de surveillance et de sécurité intégrés permettant à la fois de détecter et de neutraliser un ordre de commande erroné dû à un mauvais fonctionnement du dispositif d'élaboration et/ou à une panne ou une défaillance survenant sur l'un de ses propres circuits.

L'invention s'applique avantageusement, mais non exclusivement, aux circuits de commande d'un système de pilotage automatique d'un aéronef, en vue d'éviter que celui-ci puisse se mettre dans des configurations dangereuses lors de l'apparition de ladite panne.

Pour parvenir à ce résultat, il est connu de doubler chacune des fonctions de système d'élaboration de la loi de pilotage.

Ce moyen largement utilisé est sûr, mais présente l'inconvénient d'être onéreux.

L'invention a pour but de parvenir à ce résultat par un moyen économique, fiable et sûr, sans avoir à doubler les fonctions de pilotage.

Il est d'autre part connu de réaliser un système de sécurité au moyen d'un voteur qui sélecte ou vote un signal $\delta_2$ entre trois signaux $\delta$; $\delta_1$ et $\delta_2$ reçu; la valeur du signal $\delta_2$ voté représentant la valeur moyenne des deux autres signaux. Voir document FR—A—2334993 (SFENA).

Mais ce système connu ne permet pas d'assurer de façon simple et économique un commande auto-surveillée d'application générale à double niveau d'alarme croisé tel que décrit dans la présente invention. De plus le système connu fait intervenir en amont et en aval du voteur une série de circuits parfois complexes intervenant en combinaison avec le signal $\delta_2$.

Le système de commande auto-surveillé d'un processus selon la présente invention, telle qu'elle est caractérisée dans les revendications, comporte quatre voteurs répartis par paire entre un block de calcul numérique et un bloc de calcul analogique.

Les signaux de sorties des deux premiers voteurs commandent un premier signal d'alarme et sont interconnectés aux entrées des deux autres voteurs' les signaux de sortie de ces derniers commandant à leur tour un second signal d'alarme, en même temps qu'un actionneur à travers une boucle de puissance.

L'invention propose un système de commande à surveillance utilisant:

— au moins deux ensembles de circuits (blocs 4 et 5) émettant chacun au moyen d'un voteur des signaux de commande, permettant de substituer les signaux de commande émanat du système d'élaboration, lorsqu'ils sont erronés, par des signaux représentatifs de valeur limites (appelées ci-après des butées de sécurité ou plus simplement des butées, calculés par des circuits séparés, indépendants de ceux utilisés pour la loi de pilotage;

— un circuit émettant un signal d'alarme lorsque les signaux à la sortie des deux voteurs, ne sont pas identiques;

— un circuit de sécurité permettant de sélecter le signal émanant des deux susdits voteurs qui n'est pas erroné, dans le cas où une panne s'est produite sur l'un des deux circuits émetteurs des signaux de commande, doté d'un circuit d'auto-surveillance permettant de signaler au moyen d'un deuxième signal d'alarme un défaillance dudit circuit de sécurité.

De façon plus précise, elle propose à cet effet un système de commande à surveillance prévoyant pour chacune des fonctions du système d'élaboration, qui peut être par exemple l'élaboration d'une lois de pilotage d'un avion, un bloc 1 de calcul numérique comprenant deux ensembles de circuits; un premier ensemble, (bloc 4) comprenant des circuits 6, 10, 11 et 16 respectivement de calcul, de butées et de vote, et un deuxième ensemble (bloc 5), comprenant des circuits 17, 18, 19 respectivement de butées et de vote. Chacun de ces ensembles 4 et 5 constituant un calculateur ou un processeur numérique. La combinaison de ces deux ensembles élaborent des signaux de commande de la manière suivante:

Côté bloc 4, les circuits 6, 10 et 11 engendrent successivement quatre signaux:

— un signal déoublé émis par le circuit 6 représentant le résultat de calcul d'une fonction, faisant partie d'une loi de pilotage;

— un signal représentatif d'une valeur limite de sécurité, appelé butée haute (circuit 10), et

— un signal représentatif d'une valeur limite de sécurité appelé butée basse (circuit 11); les valeurs desdites butées 10 et 11 étant calculées par des lois indépendantes de celles utilisées pour la loi de pilotage.

Le voteur 16, dit de performance, reçoit successivement trois des quatre signaux et émet, (vote) à un instant donné un signal de commande dont la valeur est la valeur médiane des trois signaux reçus.

Côté bloc 5 le voteur 19 reçoit le signal de commande émis par le circuit 6 (en provenance du bloc 4), et deux signaux de sécurité respectivement appelés butée haute (circuit 17) et butée basse (circuit 18), semblables aux signaux de butées 10 et 11 précités (du bloc 4).

Les signaux émis par les voteurs 16 et 19 commandent: d'une part un circuit d'alarme comprenant un comparateur 21 qui émet un signal d'alarme lorsque les signaux à la sortie desdits voteurs ne sont pas identiques; et d'autre part un actionneur 3, à travers un circuit de sécurité (bloc 2) comprenant un voteur 23 commandant une boucle de puissance 25 et un voteur 26 commandant une boucle de puissance 28, et un moyen de surveillance constitué par un comparateur 29 permettant de signaler une défaillance dudit circuit de sécurité.

Dans le cadre d'un mode de réalisation très simplifié de l'invention, le signal issu de l'un des voteurs 16 ou 19 peut être transmis directement à la boucle de puissance associée à un actionneur 3.

Selon un mode simplifié de réalisation de l'invention, les deux signaux issus des deux voteurs respectifs 16 et 19 de performance, sont transmis à un voteur 23, dit voteur de sécurité qui reçoit sur sa troisième entrée un signal 24 de référence. Ce voteur de sécurité est par ailleurs relié, par sa sortie, à la boucle de puissance 25 associée à un actionneur 3. Ainsi, lorsqu'il se produit un panne sur l'un des circuits associé à l'un des voteurs de performance, le voteur de sécurité optera pour le signal délivré par le voteur dont le circuit fonctionne correctement.

Selon un mode plus élaboré de réalisation de l'invention, les deux signaux respectivement votés par les deux voteurs de performance 16, 19, sont transmis à deux voteurs 23 et 26 dits de sécurité, qui reçoivent, chacun sur leur troisième entrée un signal de référence respectivement 24 et 27. Ces deux voteurs sont reliés à deux boucles de puissance 28 et 25 dont la première consiste en une boucle image de la seconde boucle de puissance qui est elle-même reliée, par sa sortie, à un actionneur 3. Les signaux de sortie des deux boucles de puissance sont par ailleurs comparés au moyen d'un comparateur 29 qui émet un signal d'alarme lorsque ces deux signaux sont différents l'un de l'autre. Une telle disposition permet donc de signaler une défaillance se produisant sur l'un des deux voteurs de sécurité et/ou l'une des boucles de puissance qui leurs sont reliées.

On notera que, dans le cas d'un système de pilotage automatique pour aérodyne, le calculateur du susdit système d'élaboration peut regrouper les fonctions suivantes:

— la commande d'une automanette des gaz de l'aérodyne dans les principaux modes de pilotage tels que l'acquisition et le maintien du régime moteur depuis le décollage jusqu'au guidage sur piste;
— l'acquisition et le maintien d'une vitesse dans tout le domaine de vol;
— le guidage vertical de l'aérodyne, par exemple un guidage optimisé pendant le décollage et la remise des gaz;
— la gestion de la consommation de carburant, par exemple l'optimisation de la montée, du régime de croisière, de la descente et/ou de l'approche.

Par ailleurs, les butées de sécurité peuvent être variables et dépendre du mode de pilotage ainsi que de la configuration de l'avion.

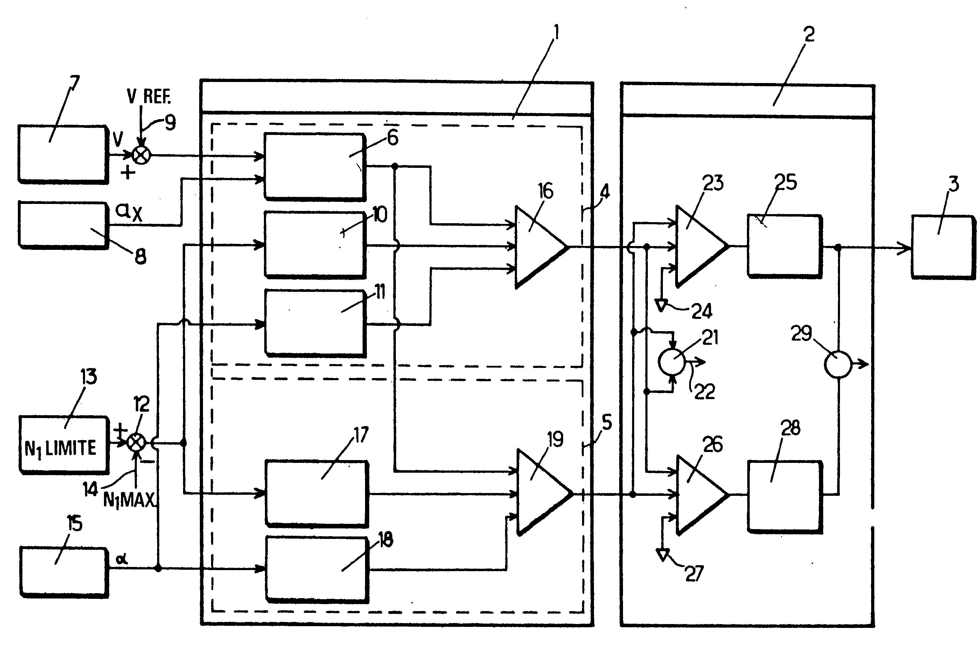

Un mode de réalisation de l'invention sera décrit ci-après, à titre d'exemple non limitatif, avec référence au dessin annexé dans lequel:

La figure unique est un schéma-bloc théorique d'un système de commande correspondant au mode "acquisition et maintien de vitesse" d'un avion.

Le système de commande représenté sur ce schéma comprend essentiellement deux blocs de calcul, à savoir:

— un bloc 1 de calcul numérique qui élabore des signaux représentatifs de l'ordre de commande et des butées hautes et basses, à partir des paramètres de l'avion et de valeurs de consignes;
— un bloc 2 de calcul analogique comprenant deux ensembles voteur-boucle de puissance associé à l'actionneur 3 qui consiste, dans l'exemple représenté, en une manette des gaz commandée par un servomoteur et un circuit de sécurité.

Le bloc 1 de calcul numérique comprend deux voies (blocs tiretés 4 et 5) constituant chacun un processeur.

Dans l'exemple représenté l'un de ces deux processeurs (bloc 4) comprend tout d'abord une unité de calcul (bloc 6) destinée à l'élaboration de l'ordre de commande du servomoteur de la manette des gaz, pour le mode maintien et acquisition d'une vitesse, à partir de la vitesse aérodynamique de l'avion détectée par une centrale anémométrique (bloc 7), d'une vitesse de référence (flèche 9) et de l'accélération selon l'axe longitudinal de l'avion, l'avion fournie par une centrale accélérométrique (block 8).

Le processeur 4 élabore également des signaux représentatifs des butées haute et basse de la manette des gaz qui correspondent, pour la butée haute (bloc ou circuit 10) à la protection contre un sur-régime de la motorisation et, pour la butée basse (bloc 11), à la protection contre une incidence élevée de l'avion. A cet effet, le circuit d'élaboration de la butée haute (bloc 10) reçoit un signal résultant de la différence (soustracteur 12) entre un signal représentatif d'une valeur limite du régime du moteur (bloc 13) et un signal représentatif d'une position maximum de ce régime (flèche 14). Le circuit d'élaboration de la butée basse reçoit quant à lui un signal représentatif de l'incidence de l'avion (détecteur 15).

Les trois signaux fournis par les blocs 6, 10 et 11 sont successivement transmis à un voteur de performance 16 qui délivre à sa sortie à un instant donné prévu par programme le signal d'entrée dont la valeur est comprise entre les valeurs des deux autres signaux d'entrée.

Le processeur 5 comprend quant à lui deux circuits d'élaboration des signaux de butée: (bloc ou circuit 17 pour la butée haute, bloc ou circuit 18 pour la butée basse), similaires aux blocs 10 et 11 du processeur 4, et un voteur de performance 19.

Les deux signaux issus des blocs 17 et 18 et la deuxième partie du signal déboublé représentatif de l'ordre de commande fourni par le bloc ou circuit de calcul 6 sont transmis à un deuxième voteur de performance 19 dont le fonctionnement est indentique au voteur 16.

Il est clair qu'en fonctionnement normal, les signaux délivrés par les deux voteurs 16 et 19 sont égaux. Par contre, s'il se produit une panne au niveau de l'un des deux processeurs 4 et 5, les signaux fournis par les deux voteurs 16 et 19 seront différents.

Ce bloc 2 de calcul analogique qui comprend deux ensembles voteur-boucle de puissance, respectivement référencés 23; 25 et 26; 28 et un comparateur 29, a pour but d'une part de détecter une telle panne, c'est-à-dire de choisir entre les deux signaux de commande fournis par les voteurs 16 et 19, celui qui n'est pas erroné, et d'autre part d'effectuer la surveillance d'une défaillance pouvant survenir sur son propre circuit.

La détection d'un panne intervenant sur l'un des deux processeurs 4 et 5 est assurée par un comparateur 21 qui reçoit les signaux de sortie des deux voteurs 16 et 19 et qui transmet un signal d'alarme (flèche 22) lorsque ses deux signaux d'entrée sont différents.

Le choix du signal de commande est, quant à lui, réalisé au moyen d'un voteur 23, dit voteur de sécurité, qui reçoit, sur ses trois entrées, respectives, les signaux délivrés par les voteurs 16 et 19 un signal de référence (flèche 24). Ce voteur de sécurité 23 est relié, par sa sortie, à une boucle de puissance 25 qui commande le servomoteur de la manette des gaz (actionneur 3).

Ainsi, dans le cas où il se produit une panne dans l'un des deux processeurs 4 ou 5, par exemple dans le processeur 4, le signal de commande voté par le voteur 16 est erroné tandis que celui fourni par le voteur 19 est correct (une des butées de sécurité est votée). La différence entre les signaux de sortie des voteurs 16 et 19 sera détectée par le comparateur 21 avec un certain délai qui doit être réglé assez long pour ne pas détecter l'écart des commandes dû à la désynchronisation des cycles de calcul des deux processeurs 4 et 5.

Le rôle du voteur de sécurité 23 est de voter pour le signal émanant du processeur qui fonctionne correctement, en l'occurence le signal fourni par le voteur 19, afin d'éviter de commander le moteur avec un ordre erroné pendant la détection de panne par le comparateur 21.

Le signal d'alarme délivré par le comparateur 21 à la suite d'une panne, peut servir à assurer la déconnexion de l'ensemble du système de commande.

La surveillance de l'élément de calcul analogique est assurée par un circuit image du circuit précédemment décrit et qui comprend un deuxième voteur de surveillance 26 qui reçoit sur ses trois entrées les signaux émanant des deux voteurs de performance 16, 19 et un signal de référence (flèche 27). Ce deuxième voteur 26 est relié, par sa sortie, à un circuit 28, image de la boucle de puissance 25, dont la sortie est reliée à l'une des deux entrées d'un comparateur 29.

Ce comparateur reçoit par sa deuxième entrée le signal produit par la boucle de puissance 25 et délivre un signal d'alarme lorsque les deux signaux fournis par la boucle de puissance 25 et le circuit 28 sont différents, ce qui se produit lorsque survient une panne sur l'un des deux couples voteurs de sécurité 23, boucle de puissance 25, et/ou voteur de sécurité 26, boucle de puissance 28.

On notera que dans le système précédemment décrit, le choix entre l'ordre dédoublé émis par le (bloc 6) et les deux circuits dénommés butées de sécurité 10—11; 17—18 se fait par des voteurs numériques 16, 19.

Une telle technologie permet, d'une part de réaliser une économie de circuit, du fait que le vote se réalise par programme et, d'autre part une limitation du nombre de convertisseurs analogiques/numériques ou échantillonneurs-bloqueurs qui seraient nécessaires dans le cas d'une utilisation de voteurs analogiques.

## Revendications

1. Système de commande auto-surveillé d'un processus comprenant au moins un actionneur (3) piloté au moyen d'un signal de commande calculé selon une loi de pilotage elaborée au moyen d'un dispositif de calcul (6) àpartir des valeurs fournies par des blocs de mesure (7, 8, 9) caractérisé en ce qu'il comporte au moins, pour chacune des fonctions que l'on désire effectuer un bloc (1) de calcul numérique comprenant:

— le circuit (6) de calcul émettant un ordre de commande dédoublé;
— deux paires de circuits (10, 11 et 17, 18) permettant d'élaborer respectivement un signal exprimant une valeur limite supérieure (butées hautes 10, 17) et une valeur limite inférieure (butées basses 11, 18);
— deux voteurs (16, 19) dits de performance recevant chacun les signaux desdites valeurs limites (butées hautes, butées basses précitées) ainsi que le signal représentatif de l'ordre de commande provenant du dispositif de calcuf chacun desdits voteurs (16, 19) transmettant celui des trois signaux d'entrée dont la valeur, à un instant donné est comprise entre les valeurs, au même instant, des deux autres signaux d'entrée;

— un comparateur (21) recevant les signaux issus des deux voteurs et qui émet un signal d'alarme lorsque les deux signaux votés ne sont pas identiques et caractérisé en ce que les deux signaux respectivement votés par les deux voteurs de performance (16, 19) sont transmis à un bloc (2) de calcul comprenant deux voteurs (23, 26), dits de sécurité, qui reçoivent sur leur troisième entrée (24, 27) un signal de référence, et en ce que les deux voteurs (23, 26) sont respectivement reliés à deux boucles de puissance (25, 28) dont la première (25) consiste en une boucle image de la seconde boucle de puissance (28) et est elle-même reliée, par sa sortie à l'actionneur (3), et en ce que les signaux de sortie des deux boucles de puissance (25, 28) sont par ailleurs comparés au moyen d'un comparateur (29) qui émet un signal d'alarme lorsque ces deux signaux sont différents l'un de l'autre.

2. Système de commande selon la revendication 1 caractérisé en ce que les susdits voteurs de performance (16 et 19) sont des voteurs numériques, tandis que les susdits voteurs de sécurité (23 et 26) sont des voteurs analogiques.

**Patentansprüche**

1. Selbstüberwachende Steuerung eines Prozesses mit wenigstens einem Betätigungsorgan (3), das mittels eines Steuersignals gesteuert wird, das nach einer Steuervorschrift berechnet wird, die mittels einer Einrichtung (7, 8, 9) eines Rechnerkreises (6) von Werten von Meßblöcken geliefert ausgehend verarbeitet wird, dadurch gekennzeichnet, daß sie wenigstens für jede Funktion, die man mit einem numerischen Rechnerblock (1) berechnen will, aufweist

— den Rechnerkreis (6), der einen zweigeteilten Steuerbefehl abgibt,
— zwei Paare von Schaltkreisen (10, 11 und 17, 18), die es ermöglichen, ein Signal, das einen oberen Grenzwert (obere Grenzen 10, 17) bzw. einen unteren Grenzwert (untere Grenzen 11, 18) ausdrückt, zu verarbeiten,
— zwei Leistungswählkreise (16, 19), die jeweils die Signale der Grenzwerte (vorerwähnte obere und untere Grenzen) ebenso wie das Signal empfangen, das für den Steuerbefehl repräsentativ ist, der von dem Rechnerkreis (6) stammt, wobei jeder der Wählkreise (16, 19) dasjenige der drei Eingangssignale weiterleitet, dessen Wert in einem gegebenen Zeitpunkt zwischen den Werten der beiden anderen Eingangssignale im gleichen Zeitpunkt liegt,
— einen Komparator (21), der die von den beiden Wählkreisen abgegebenen Signale empfängt und eine Alarmsignal abgibt, wenn die beiden entsprechend ausgewählten Signale nicht identische sind, und dadurch gekennzeichnet, daß die beiden Signale, die durch die beiden Leistungswählkreise (16, 19) ausgewählt wurden, auf einen Rechnerblock (2), der zwei Sicherheitswählkreise (23, 26) aufweist, die auf ihrem dritten Eingang (24, 27) ein Bezugssignal empfangeng, gegeben werden, und daß die beiden Wählkreise (23, 26) entsprechend mit zwei Leistungsschleifen (25, 28) verbunden sind, von denen die erste (25) aus einem Schleifenabbild der zweiten Leistungsschleife (28) besteht und selbst mit ihrem Ausgang mit dem Betätigungsorgan (3) verbunden ist und daß die Ausgangssignale der beiden Leistungsschleifen (25, 28) desweiteren mittels eines Komparators (29) verglichen werden, der eine Alarmsignal abgibt, wenn die beiden Signale voneinander verschieden sind.

2. Selbstüberwachende Steuerung nach Anspruch 1, dadurch gekennzeichnet, daß die genannten Leistungswählkreise (16 und 19) numerische Wählkreise sind, während die Sicherheitswählkreise (23 und 26) Analogwählkreise sind.

**Claims**

1. A self-monitoring control system for controlling a process, the system comprising at least one actuator (3) driven by a control signal which is calculated according to an actuator-drive law which is established by calculation means (6) on the basis of values provided by measuring units (7, 8, 9), characterised in that it comprises at least one digital calculation unit (1) per function to be calculated, said digital calculation unit comprising:

said calculation means generating a duplicated control instruction;
two pairs of circuits (10, 11 and 17, 18) for generating respective maximum limit value signals (upper stops 10, 17) and minimum limit value signals (lower stops 11, 18);
two performance voting circuits (16, 19) each of which receives said limit value signals (above-mentioned upper and lower stops) and the signal representative of the instruction from the calculation means (6), each of said voting circuits (16, 19) forwarding that one of its three input signals whose value at a given instant lies between the values of the other two input signals at that instant;
a comparator (21) receiving the signals from the two voting circuits and generating an alarm signal when the two voting circuit signals are not identical and characterised in that the respective signals from the voting circuits (16, 19) are transmitted to a calculation unit (2) comprising two safety voting circuits (23, 26) each having a third input (24, 27) receiving a reference signal, and in that the two voting circuits (23, 26) are connected to respective power loops (25, 28) the first of which (25) consists in a loop which is the image of the second power loop (28) and is itself connected, via its output to the actuator (3), and in that the output signals from the two power loops (25, 28) are further compared by means of a comparator (29) which generates an alarm signal when said two signals differ from each other.

2. A control system according to claim 1, characterised in that the above-mentioned performance voting circuits (16 and 19) are digital voting circuits, while the above-mentioned safety voting circuits (23 and 26) are analog voting circuits.

0 007 270